# EUROPEAN PATENT APPLICATION

(11) **EP 3 113 039 A1**
(43) Date of publication of application: **04.01.2017**
(21) Application number: 15174398.6
(22) Date of filing: 29.06.2015
(51) Int. Cl.: G06F 17/30, G06Q 10/06

(54) **JOB SEARCH ENGINE**

(71) Applicant: Jobspotting GmbH, 10437 Berlin (DE)
(72) Inventor: The designation of the inventor has not yet been filed
(74) Representative: Schulz Junghans Patentanwälte PartGmbB

(57) **Abstract**

The invention relates to a method and a computer program for identifying job offers matching a job query, comprising the steps of:
Providing (100) a plurality of job offers (1),
Parsing (101) each job offer (1) in job offer components (2),
Providing (102) a vocabulary (3) of terms (10), wherein said vocabulary is particularly at least in parts represented and/or stored in a graph of a grpah database (4), Determining (103) for each job offer component (2) terms (10j) from the job offer component (2) that are comprised in the vocabulary(3),
Determining (104) descriptive terms (10d) comprised in the vocabulary (3) for each job offer component (2),
Storing (105) for each job offer (1) the descriptive terms (10d) for each job offer component (2) of the respective job offer (1) in a search index (6),
Providing (106) query terms (10q) comprised in the vocabulary (3),
Determining (107) clusters of query terms in the vocabulary, wherein each cluster comprises at least one query term,
Selecting (108) at least one cluster (13) of query terms (10q),
Determining (109) job offers (1) comprising descriptive terms (10d) matching the at least one query term (10q) from the at least one selected cluster (13).

## Description

### Specification

The invention relates to a method as well as a computer program for identifying a job offer matching a job query according to claim 1 respectively claim 13.

Today a variety of search engines are available in the internet that are designed as search engines for jobs. These engines store a plurality of job offers that are provided by companies or other job providers. The job providers have to fill in a form, describing the job offer. These forms usually comprise a job title, a description, a short part about the company profile and a location. Furthermore, other aspects might be of interest that are provided in the job offer description by the job provider. The job seeker on the other side has the possibility to formulate a job query where he/she specifies the job he/she is seeking for.

The job search engine then seeks a matching job offer and presents the results to the job seeker.

Job search engines apply fulltext search to retrieve matching documents on behalf of the job seeker. There are many examples though, where such a straight-forward approach does not lead to satisfying results: 1) As the term has to appear nearly literally (ie. stemmed) in the document, the search could not find relevant documents referring to the same concept using a different term or transliteration; 2) fulltext search does not take context into account in which a term is mentioned, leading to potentially irrelevant results; 3) there are little means to establish how centrally important a term is for a document, decreasing relevancy for the matches. Especially in new kinds of jobs e.g. in the field of software programming or software development a unified denomination of skills is not yet established for many job profiles. As lined out above this can lead to said involuntary omission.

Therefore, many results presented from state of the art search engines are not yielding the desired matches. This has also economic consequences. Job providers often pay a fee each time their job offer is presented to a job seeker. The more often a job is presented to a job seeker that is not applying for the presented job offer, maybe because the presented job offer is not considered a matching job by the seeker or the number of present jobs was too high, the job providers financial investment was in vain.

Therefore the problem underlying the invention is to improve the existing methods in order to provide better matches for a given job query.

This problem is solved by a method according to claim 1 as well as a computer program according to claim 13.

According to claim 1, a method for identifying a job offer matching a job query comprises the following steps:
- Providing a plurality of particularly computer-readable, electronic job offers,
- Providing a vocabulary of terms particularly related to job offers, wherein said vocabulary is particularly at least in parts represented and/or stored as a graph in a graph database,
- Parsing each job offer in job offer components,
- Determining for each job offer component terms from the job offer that are comprised in the vocabulary,
- Determining descriptive terms comprised in the vocabulary for each job offer component,
- Storing for each job offer the descriptive terms in a search index, particularly wherein the respective job offer is linked to the respective indices of the search index,
- Providing query terms comprised in the vocabulary,
- Determining clusters of query terms in the vocabulary, wherein each cluster comprises at least one query term,
- Selecting at least one cluster of query terms,
- Determining job offers comprising descriptive terms matching the at least one query term from the at least one selected cluster.

Job offer components are for example the job title or information regarding the job provider, such as location and name. Furthermore, a job offer particularly comprises at least one job offer component that can be considered as a description of the job. This description comprises particularly skills the job provider requests from a job seeker.

The vocabulary is particularly a semantic knowledge base of concepts related to job offers. One representation of the vocabulary is a graph that structures the concept space according to the relatedness of concepts. That graph is stored in a graph database for quick access to related edges and their properties. As a graph database is any storage system that provides index-free adjacency, every term of the vocabulary contains a direct pointer to its adjacent terms and no index lookups are necessary.

However, the vocabulary might contain also information, that is not well representable or storable in a graph of a graph database - this issue is reflected by the phrase that the vocabulary is at least in parts represented and/ or stored in a graph of a graph database.

In general, the vocabulary concepts such as skills, categories are represented by nodes in the graph. Another representation of the vocabulary is the so-called Resource Description Framework (RDF), a standardized semantic web format. Properties are pertinent information that relate to said concept entities. For instance, if "physics" were one of the entities, one might have it tied to properties such as "natural sciences".

Edges of the graph can be represented as lines that connect nodes to nodes or nodes to properties and they represent the relationship between the two.

The graph is established for example by analyzing a multitude of job offers and identify relationships between terms that are comprised by said job offers. For this task to be accomplished, a dedicated interface can be established that allows for curating, i.e. adding, connecting, reconnecting, merging, translating and/or deleting nodes with other concepts of the vocabulary.

Said vocabulary can comprise 30.000 or more terms. For representing and querying the vocabulary in a graph, a Neo4j graph database can be used.

The vocabulary according to the invention is particularly a curated, canonicalized, disambiguated knowledge base of job-related terms, including synonyms, translations, categorizations, and pointers to semantic web resources such as wikipedia.

Canonicalized in this context means that terms and/or their properties are referred to in a common format that particularly uses only terms comprised by the vocabulary. Furthermore disambiguation of the terms, categories and concepts in the vocabulary is particularly advantageous as often two different have the same meaning or vice versa.

The step of determining terms comprised in the vocabulary from each of the plurality of job offers is also referred to as entity extraction. As job offers are usually written in natural language, it is mandatory to extract the terms from each job offer that are comprised in the vocabulary and thus are most likely connected to job specific aspects. This can be done by dedicated methods and algorithms for example with the software "Apache Stanbol" connected with the vocabulary. Said software's intended use is to extend traditional content management systems with semantic services. Other feasible applications include: direct usage from web applications e.g. for tag extraction/suggestion, text completion in search fields, 'smart' content workflows or email routing based on extracted entities, terms, etc.

The step of determining descriptive terms comprised in the vocabulary for each job offer is of particular relevance.

As the entity extraction extracts all known terms from a given job offer, in this step the terms that are most descriptive to the job offer are identified. There are several ways to determine the descriptive terms as will be explained below.

A search index generally is a list of documents - typically saved in plain text and analysed by an underlying search backend. Here, search indices are used for storing job data as well as company and location information. In all cases the documents are particularly enriched with metadata to not only speed up the retrieval process from such a search index but also to increase relevancy of the search results from the index. Since most of the data is canonicalized during the above mentioned processing steps, analysing full text search of the job offer with a predefined search analyser (e.g. the description or the title) is not necessary, but instead metadata from those fields on the individual job document are stored.

The same or a similar entity extraction process can be applied to information that is provided by a job seeker-for example by analysing the curriculum vitae of said seeker by the entity extraction. The terms for the query can also be provided directly by input of the seeker, e.g. by selecting terms from a list that describe his/her skills and work experience best.

Clustering query terms is equivalent to grouping a set of terms in such a way that terms in the same group, are more related to each other than to those in other clusters. Clustering can be done in several ways. The relatedness of two terms is determined by the vocabulary as the vocabulary provides edges connecting related terms and particularly exhibit an associated score value that reflects the degree or strength of relatedness between two connected terms in the vocabulary.

Each cluster that has been determined can be used for querying the search index for matching jobs.

The advantage of this approach is that terms that are related to the same concept can be clustered this way. A query containing terms that are related will yield better results when submitted to a vocabulary that is structured according to the invention. Another advantage of this approach is that a job query can contain a large number of terms. If all the terms would be queried according to an "AND" Boolean operator, the set of resulting job offers would be too small, neglecting a majority of potentially matching job offers. On the other side submitting the query terms in form of an "OR" Boolean operator, the set of matching job offers might be too large.

By clustering the terms, and submitting the clusters by e.g. using an Elastic Search algorithm, this problem can be overcome.

In one embodiment of the invention job offers that happen to match several clusters of query terms are marked as particularly relevant.

It is advantageous that applying this method, an intentionally diverse set of results that is supposed to deliver both narrow, relevant matches based on the clusters as well as inspirational matches for job offers that the job seeker might not have considered can be generated.

The job seeker might provide additional feedback to the results such that in future job queries from said seeker, this feedback is included. Such a feedback might be realized particularly by interactively promoting or demoting results, by e.g. a scoring or rating interface.

According to another embodiment of the invention, the vocabulary comprises categories that provide superordinate concepts for the terms of the vocabulary, wherein each category exhibits an associated term that describes said category. Such categories are particularly also comprised in the graph database.

These categories provide one way of identifying clusters of related terms.

In another embodiment of the invention, for each job offer category-subsets are determined that comprise terms from the respective job offer that belong to the same category.

Which terms belong to a specific category is determined by the vocabulary, the categories are determined using either semantic database or custom-written interfaces for curating such a vocabulary.

According to another embodiment of the invention, for each term of a job offer the textual distance to all other terms from the respective job offer is determined, wherein the textual distance is particularly measured in units of terms.

The textual distance is particularly the distance between terms from the running text of the job offer, when read along the direction of reading.

Estimating said textual distance is particularly advantageous as the textual distance can give hints about whether terms are referring to the same concept within the job offer or not. For example a series of terms like "chemistry, physics or biology " exhibit very short textual distances as the terms "chemistry", "physics" and "biology" are positioned in direct proximity of each other within the running text.

In another embodiment of the invention for each job offer proximity-subsets are determined that comprise terms from the respective job offer that are positioned within a predefined textual distance from each other in the respective job offer.

Said predefined textual distance might range from 3 to 4 characters, particularly from 1 to 10 words.

According to another embodiment of the invention, the vocabulary comprises vectors that connect related terms of the vocabulary and wherein each vector exhibits an associated particularly numerical score value.

These vectors are particularly edges comprising the property of a score value.

The numerical values can be chosen such that the greater the score value is between to terms the stronger the terms are related.

According to another embodiment of the invention, for each job offer relatedness-subsets are determined that comprise terms from the respective job offer that exhibit at least one direct connection to another term of the respective job offer.

This embodiment has the advantage that these subsets can be used for grouping related terms.

In another embodiment of the invention the descriptive terms for each job are the terms from the job offer and
- the category of which at least one term of the respective job offer that is comprised by the corresponding category-subset is also comprised in a relatedness-subset of the respective job offer,
- all terms from a proximity-subset of the respective job offer if at least one term of said proximity-subset of the respective job offer is also comprised in a relatedness-subset of the respective job offer, and/or
- all terms that are comprised in the title of the respective job offer.

By assigning these terms as descriptive terms to the job offers, so called "content enrichment" is facilitated.

By comparing the different intersecting subsets of terms as described, terms that might not be written within the job offer but refer to related concepts are discovered by the method according to the invention.

In a variation of the invention the descriptive terms are determined by the following steps:
- Determining for each term of the respective job offer the number of connected terms that exhibit a score value beyond a predefined threshold value,
- Assigning such interconnected terms as descriptive terms, if the number of said interconnected terms exceeds a predefined number.

If there are no interconnected terms whose number of interconnected terms exceeds the predefined number, the interconnected terms exhibiting the highest number of interconnected terms are assigned as descriptive terms and terms that exhibit the highest number of direct connections to other terms are assigned as descriptive terms.

The predefined number particularly ranges from 1 upwards.

In another embodiment of the invention the cluster of query terms comprise at least two terms from the respective job query that are connected to another, wherein particularly the connection comprises vectors connecting terms from the vocabulary that are not comprised in the respective job query.

In this sense, two terms are considered connected, if there are vectors connecting these terms, even if the connection comprises one term that is not mentioned in the query terms, but comprises connections to the at least two terms.

One advantage of this embodiment is that clusters of query terms can be identified, even if a direct connection between the query terms might not be present.

In another embodiment of the invention, the cluster of query terms comprises also the connected terms between two indirectly connected terms from the respective job query.

In a further embodiment of the invention each job offer is parsed in job offer components, wherein each term of the respective job offer is linked to the respective job offer component that comprises the respective term, wherein the job offer components are particularly the title of the job offer, the location of the employer and/or the description of the job offer.

The problem according to the invention is also solved by a computer program according to claim 13.

According to claim 13, the computer program for identifying a job offer matching a job query comprises at least the following steps:
- Providing a plurality of particularly computer-readable, electronic job offers,
- Providing a vocabulary of terms particularly related to job offers,wherein said vocabulary is particularly at least in parts represented and/or stored as a graph in a graph database,
- Parsing the job offer in job offer components,
- Determining for each job offer terms from the job offer that are comprised in the vocabulary,
- Determining descriptive terms comprised in the vocabulary for each job offer,
- Storing for each job offer the descriptive terms in a search index, particularly wherein the job offers are linked to the indices of the search index,
- Providing query terms comprised in the vocabulary,
- Determining clusters of query terms in the vocabulary, wherein each cluster comprises at least one query term,
- Selecting at least one cluster of query terms,
- Determining job offers comprising descriptive terms matching the at least one query term from the at least one selected cluster.

Said computer program is furthermore designed to execute all steps of the method according to the invention or to provide instructions to other computers and or computer programs that lead to an execution of the steps according to any embodiment of the above described invention.

Further features and advantages of the invention shall be described by means of a detailed description of embodiments with reference to the figures. It is shown in:

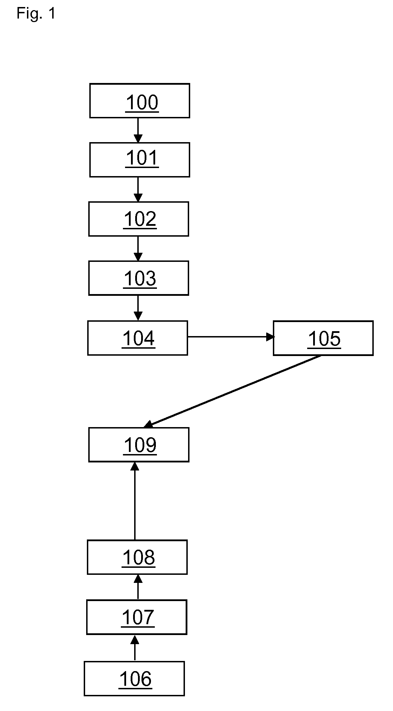

- Fig. 1: a flow chart of the steps comprised by the method according to the invention;

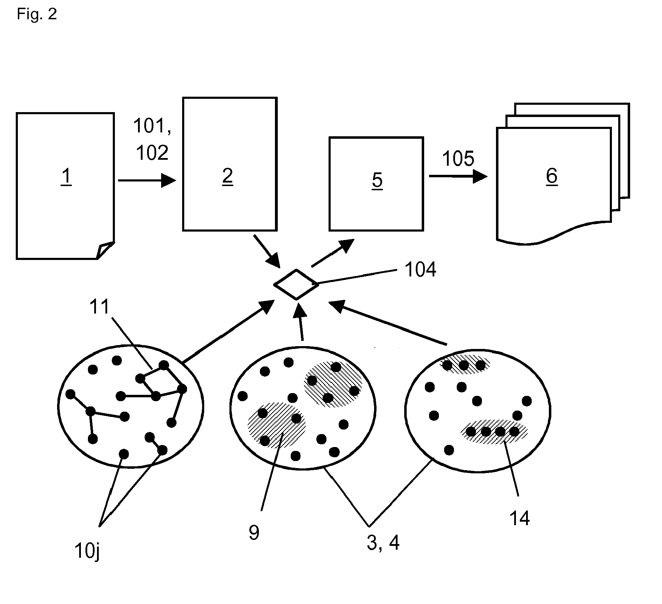

- Fig. 2: determination of descriptive terms;
- Fig. 3: input data clustering of query terms; and
- Fig. 4: a chart of the building blocks of the method.

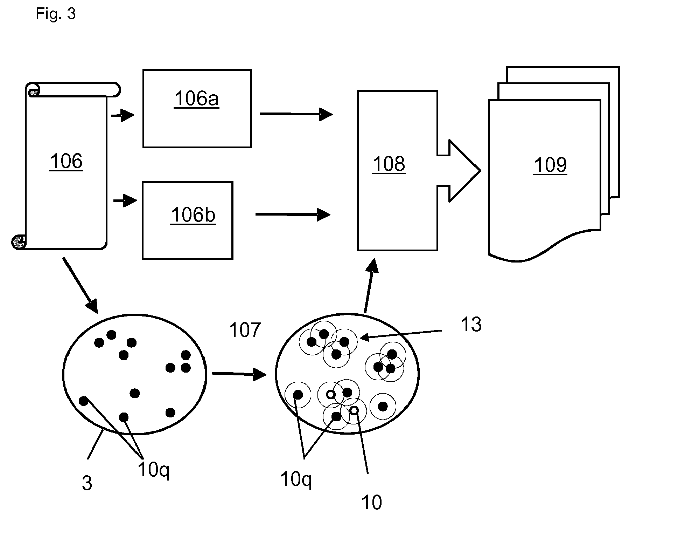

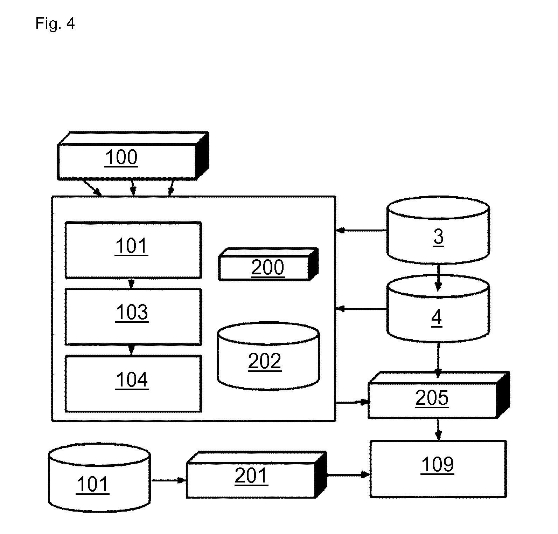

The method and computer program according to the invention can be understood as a data-driven discovery engine for personalized job matching based on the job seekers' skills and professional experiences. The service can be accessed through a web interface and/or a native iOS app 201 (see Fig. 4); Other applications are conceivable. Unlike traditional job search engines, job seekers have the ability to create a personal job-feed 109 for all their interests, and provide explicit feedback 106b (see Fig. 3) on the presented job offers 1 to further personalize their job feed 109. Recommendations are powered by a unique graph representation 4, resulting in superior relevancy and broader diversity compared to traditional job search engines. Job offers 1 are aggregated through partner feeds and crawlers 100. The accumulated data from these job offers 1 is parsed 101, analysed, classified and stored 105 in a search index 6. The graph 4 comprises a vocabulary 3 specifically tailored to terms 10 common in job offers 1, wherein the graph 4 is established by training over a large set of job offers 1 for determining relationships, connections, weights and relatedness of terms 10 from the vocabulary 3.

### Detailed Examples:

### Vocabulary / graph database

The custom designed vocabulary 3 consists of a plurality of job related terms 10 and other terms 10 that appear in job offers 1 and that could potentially be relevant to a job seeker, such as for example terms relating to locations of companies. The vocabulary 3 is at least partially structured as a graph in a graph database 4, i.e. it comprises nodes that are connected via edges to other nodes and properties that are associated to either the nodes and/or the edges. In the present case terms 10 are treated as nodes and vectors are treated as edges.

The vocabulary 3 comprises synonyms, translations and might be connected to freebase. Furthermore, the vocabulary 3 is stored in a traditional, SQL database. However, some parts of the vocabulary, particularly the information about how the concepts are related to each other, are stored as a graph, in a graph database 4. Therefore the vocabulary 3 can be understood as a curated collection of semantically related and ordered terms 10. The vocabulary 4 is particularly canonicalized, connected to Freebase and DBpedia, categorized, disambiguated, associated to synonyms and translated into other languages.

The terms 10 comprised in the vocabulary 3 are identified for example by an extensive entity extraction on several 100.000 job offers.

Furthermore for the creation of this vocabulary 3 for all identified terms, term-related data is gathered e.g. from freely available sources like StackOverflow, Wikipedia, Freebase and others.

The vocabulary 3 is represented in a graph database 4 for example using a Neo4j graph database. The process for establishing relatedness information of the vocabulary 3 is performed on a representative sample of job offers 1 to create a job offer / term matrix and cluster them using Singular Value Decomposition (Principal Component Analysis). This way it can be estimated how likely terms from the vocabulary 3 are to appear together in a job offer 1, and the relationships between the terms can be modelled accordingly in the graph database 4.

Furthermore all elements from said vocabulary can be established by manual input. The graph database 4 therefore not only stores the terms 10 but also how closely related these terms 10 are. The Neo4j's Cypher queries can be used to detect which terms in a job offer 1 are considered more important than others, or to group user-selected terms into groups.

This approach provides the following advantages:
- language-agnostic matching of terms
- smart recommendations for additional terms based on existing selection of terms
- cluster terms into separate, distinct groups to filter out noise and identify core themes,
- sophisticated autosuggest for convenient topic selection in the user-interface
- find matching jobs that do not mention a given keyword, but "related" concepts
- recognize concepts by term variations in job offers / user profiles online (e.g. Linkedln)
- query jobs for meaningful groups of topics for diverse results In the following it is shown how job offers 1 can be acquired, how terms 10j from a job offer 1 are extracted 102 and how these terms 10j are stored in the search index 6. Furthermore it is described how job queries are treated such that from a job query matching job offers 1 can be identified.

### 1^{st} step: Job offer acquisition and parsing into job offer components

It is important to gather many job offers 1 from a wide variety of sources, as for topical niches the quality of job offer recommendations may come down to whether the few existing job vacancies are included in the search index 6, or not.

From a technical perspective, the acquisition of job offers 1 is facilitated by so-called fetcher servers 100 that are designed to acquire job offers 1 from different sources. The main tasks of these fetchers include:
- accessing and parsing job offer data from XML feeds and custom application program interfaces (APIs) from selected sources of job offers
- crawling and parsing static HTML pages from static and dynamic public websites

Acquired job offers 1 are subsequently parsed 101 with a dedicated parsing software, for example BeautifulSoup. The parsing software splits acquired job offers 1 into more than 50 associated job offer components 2 like job title, description of the job, location, type of the contract, etc..

### 2^{nd} step. Named entity / term extraction

In order to conform an acquired job offer 1 to the vocabulary 3 and the graph database 4, terms 10j - i.e. keyword entities - are extracted 103 from the job offer 1 and/or the job offer components 2 respectively. Mistakes during this step can heavily influence the next steps of analysis and the matchmaking 109. Key requirements for this step include:
- support for natural language processing, semantic web and multilingualism,
- detect terms consisting of multiple words or fuzzy matches,
- provide proximity, counts and confidence scores.

For this purpose Apache Stanbol 200 can be used - a semantic content enhancement engine. Apache Stanbol 200 meets the technical requirements for this task and is designed for extracting the terms 10 that are provided by the vocabulary 3.

As the vocabulary 3 data is formatted as / compiled into a resource description framework, a semantic web format, it is suitable for the use with Stanbol.

Since resource description framework files are multi-language, Stanbol uses the appropriate parts of it, depending on the job offer language.

The entity extraction process 103 can be applied to all job offer components 2. In certain cases it is applied for example to the job offer component "location" in order to extract terms related to a location. It is however also possible to apply the entity extraction to a job seeker's curriculum vitae in order to extract query terms that are subsequently used for identifying matching job offers.

### 3^{rd} step. Classification & analysis

All job offers are split into a "raw" part as provided by the source that provided that job offer, and a "clean" part (also referred to as canonicalized) that only contains terms 10 from the vocabulary and that is also parsed in various job offer components 2.

As the job offer component 2 "location" for example contains parts of the job offer 1 that refer to a location, one problem that might occur is that locations can be specified in many different ways, ranging from just a city name to as detailed as geolocation data.

The system connects to the OpenStreetMap API to identify new locations and store them in a custom internal format in a database.

This process allows associating a job offer with a specific location. Similarly, a database of known companies is established where information about the companies is accumulated. Further classifiers are applied to the job offer 1 to detect whether a company is a recruitment agency, a start-up etc. In addition to this, the company data are enriched through manual outsourcing efforts to enable further company related filters and preference settings.

Once a job offer 1 is analysed particularly both parts - the "raw" part and the canonicalized part - of the respective job offer are stored or linked to a search index 6.

### 4^{th} step. Indexing in ElasticSearch

Any job offer 1 that is added to or updated in the search index 6 is synced to the ElasticSearch index 205. With this, a realtime system is established: new job offers 1 acquired from a source can be served to job seekers within minutes and without manual intervention.

### 5^{th} step. Matchmaking

With the job offers 1 stored in the search indexes 6, it is necessary to identify the terms 10q that are descriptive for the skills and experiences of the job seeker. For this purpose several techniques are available. The most common and convenient way is that the job seekers choses terms 10q and categories from the vocabulary 3 that he deems most descriptive for his skills and his expertise. Alternatively the entity extraction 101 can be applied to the curriculum vitae of the seeker or a seeker's online profile (e.g. Linkedln).

The job seeker furthermore has the possibility to filter 106a for conditions like locations, company types, seniority levels etc.

A common problem with the job queries is that often a large number of query terms 10q is provided. As mentioned above, if the large set of query terms 10q would be used applying some "AND" logic, it would certainly yield too few results. If on the other hand an "OR" logic would be applied to the search query, results would be far too broad and scattered.

According to the invention this problem is solved, by submitting the query terms to the graph database 4 and by grouping the query terms into clusters 13 that become individual query parts of their own.

Job offers 1 that happen to match several clusters 13 are marked as particularly relevant jobs.

A primary application of the matchmaking 109 is the so-called "job feed". This primary application presents an intentionally diverse set of results from the matchmaking to the seeker that is supposed to deliver both narrowly relevant matches based on the clusters 13 of query terms 10q from the seeker profile, as well as inspirational matches for jobs that the seeker might not have considered. The application monitors how the seeker interacts with the job feed by storing clicks and explicit feedback in the seeker profile, so that more matches for clusters are presented to the seeker that the seeker seems most interested in based on the seekers interaction. In addition, the application is able to take seeker feedback into account:
- if a seeker communicates which job offers he considered good matches, the ElasticSearch is used to pull job offers that are similar and mix them into the job feed,
- if a seeker communicates that certain terms imply bad matches, the ElasticSearch query is compiled in a way that demotes job offers containing such terms,
- if a seeker communicates a preference for certain companies, a ranking boost is applied to jobs from such companies

As lined out above the search index 6 is queried via multiple ElasticSearch queries particularly based on clusters of query terms 10q.

The following paragraph gives an example how these clusters 13 are determined.

### Dynamic query generation on seeker side

The provided query terms 10q are grouped into clusters 13 using relatedness data from the graph database 4.

Clusters 13 are therefore groups of related terms. Small clusters 13 are particularly extended automatically with additional terms 10 that have not been part of the set of query terms 10q.

Each cluster 13 is treated as separate query component for the ElasticSearch.

In order to generate the clusters 13 the query terms 10q are analyzed regarding their relatedness. Terms 10 in a graph database 4 are related if there is a connection between these terms 10. These connections have been established with the graph representation of the vocabulary 3. An additional score value is assigned to the connections, that quantifies the closeness of the relation. The score value between terms 10 can be visualized in form of some kind of distance metric, i.e. the more related two terms 10 are the closer they appear in the graph 4 and the less related two terms are the farther apart they are positioned within the graph 4. In a first step, it is determined to which terms the query terms are connected in the graph 4.

In a second step clusters 13 are established that comprise query terms 10q that are directly connected. In a third step clusters 13 are expanded, merged or newly established which comprise query terms 10q that are connected to the same term, wherein said term is particularly not comprised by the query terms 10q. These terms are referred to as bridging terms.

Optionally it is possible to add the bridging terms to the cluster 13.

Query terms that remain outside of all established clusters 13, for example because they do not exhibit any connections to other query terms 10q or bridging terms, are marked as clusters 13 as well.

Each of the clusters 13 that have been established is the basis of a separate search query, wherein such a query comprises all terms that are grouped in the respective cluster.

The number of presented job offers 1 particularly depends on the size of the respective cluster 13, i.e. the number of query terms 10q comprised by the respective cluster 13.

Furthermore the feedback as described above is influencing the relevancy of the clustered query terms in the matchmaking process, .i.e. even if a cluster 13 is comparably large it might be considered of less importance, because the seeker communicated this to the job feed application.

### Determining descriptive terms of the job offers

In contrast to the cluster 13 of query terms 10q the selection of descriptive terms 10d can be achieved as described by the alternatives of the "set-intersection method" or by the "method of contraction".

### Set-intersection method:

In order to identify terms 10d that are particularly descriptive for a job offer 1, three different kinds of sub-sets of terms 10j of a job offer 1 are established.

A first subset, the "category-subset" 9, is established by terms 10j that belong to the same category.

The second subset, the"proximity-subset" 14, is established by analyzing the textual distance between the job offer terms 10j in the running text of the respective job offer 1.

For instance the words "skill1" and "skill2" in the following sentence have a smaller textual distance as "skill1" and "word":
"The textual distance between skill1 and skill2 is close and gets larger with every word."

One measure for the textual distance is the number of words between the respective terms.

The third subset, the "relatedness subset" 11, comprises terms 10j from the respective job offer component 2 that exhibit at least one direct connection to another term 10j of the respective job offer component 2. In contrast to the cluster 13 of the query terms 10q, only direct connections are grouped in the relatedness-subset, wherein indirect connections, via a bridging term are not comprised in this set.

For determining the descriptive terms 10d, intersections of the above described subsets are evaluated. For instance, additionally to the terms 10j from the job offer 1, also the category of which at least one term comprised by the corresponding category-subset 9 is also comprised in a relatedness-subset 11 of the respective job offer is considered a descriptive term 10d.

Furthermore all terms 10j from a proximity-subset 14 of the respective job offer 1 are considered as descriptive terms 10d, if at least one term 10j of said proximity-subset 14 of the respective job offer 1 is also comprised in a relatedness-subset 11 of the respective job offer 1.

Empirical studies have shown that all terms 10j that are comprised in the title of the respective job offer 1 are considered descriptive terms 10d.

Another method for determining the descriptive terms is the "contraction method" (not shown in a Figure):
Here, for each term 10j from the job offer 1 a neighbourhood in the graph database 4 is evaluated. The neighbourhood is defined by a certain score value, i.e. for example by the distance between the respective term to the surrounding terms 10j from the job offer 1.

This distance is successively shrunk (i.e. the score value is shifted such, that the terms become "more related") by a certain factor. After each contraction, it is checked whether a predefined number of terms 10j are now within the neighbourhood of the respective term. Once there are enough terms 10j in at least one neighbourhood of such a term or if a maximum contraction factor is reached, all the terms 10j within the neighbourhood of the respective term are considered to be descriptive terms 10d.

Both approaches yield good results.

## Claims

1. Method for identifying job offers matching a job query, comprising the steps of:
- Providing (100) a plurality of job offers (1),
- Parsing (101) each job offer (1) in job offer components (2),
- Providing (102) a vocabulary (3) of terms (10), wherein said vocabulary is particularly at least in parts represented and/or stored in a graph of a graph database (4),
- Determining (103) for each job offer component (2) terms (10j) from the job offer component (2) that are comprised in the vocabulary(3),
- Determining (104) descriptive terms (10d) comprised in the vocabulary (3) for each job offer component (2),
- Storing (105) for each job offer (1) the descriptive terms (10d) for each job offer component (2) of the respective job offer (1) in a search index (6),
- Providing (106) query terms (10q) comprised in the vocabulary (3),
- Determining (107) clusters of query terms in the vocabulary, wherein each cluster comprises at least one query term,
- Selecting (108) at least one cluster (13) of query terms (10q),
- Determining (109) job offers (1) comprising descriptive terms (10d) matching the at least one query term (10q) from the at least one selected cluster (13).

2. Method according to claim 1, wherein the vocabulary (3) comprises categories that provide superordinate concepts for the terms (10) of the vocabulary (3), wherein each category exhibit associated terms that describe said category.

3. Method according to claim 2, wherein for each job offer (1) category-subsets (9) are determined that comprise terms from the respective job offer that belong to the same category.

4. Method according to one of the preceding claims, wherein for each term (10j) of a job offer (1) the textual distance to all other terms (10j) from the respective job offer (1) is determined, wherein the textual distance is particularly measured in units of terms (10).

5. Method according to claim 4, wherein for each job offer (1) proximity-subsets (14) are determined that comprise terms (10j) from the respective job offer (1) that are positioned within a predefined textual distance from each other in the respective job offer (1).

6. Method according to claim one of the preceding claims, wherein the vocabulary (3) comprises vectors that connect related terms of the vocabulary (3) and wherein each vector exhibits an associated score value.

7. Method according to claim 6, wherein for each job offer relatedness-subsets (11) are determined that comprise terms (10j) from the respective job offer (1) that exhibit at least one direct connection to another term (10j) of the respective job offer (1).

8. Method according to claim 6, wherein the descriptive terms (10d) for each job offer (1) are the terms (10j) from the job offer (1) and
- the category of which at least one term comprised by the corresponding category-subset is (9) also comprised in a relatedness-subset (11) of the respective job offer (1),
- all terms from a proximity-subset (14) of the respective job offer (1) if at least one term of said proximity-subset (14) of the respective job offer (1) is also comprised in a relatedness-subset (9) of the respective job offer,
- all terms (10j) that are comprised in the title of the respective job offer (1).

9. Method according to claim 6, wherein the descriptive terms (10d) are determined by the following steps:
- Determining for each term of the respective job offer (1) the number of connected terms that exhibit a score value beyond a predefined threshold value,
- Assigning such interconnected terms as descriptive terms (10d), if the number of said interconnected terms exceeds a predefined number.

10. Method according to claim 9, wherein, if there are no interconnected terms whose number of interconnected terms exceeds the predefined number, the interconnected terms exhibiting the highest number of interconnected terms are assigned as descriptive terms (10d) and terms that exhibit the highest number of direct connections to other terms are assigned as descriptive terms.

11. Method according to claim 6, wherein the cluster (13) of query terms (10q) comprise pairs of terms from the respective job query that are connected to another, wherein particularly the connection comprises vectors connecting terms from the vocabulary that are not comprised in the respective job query.

12. Method according to claim 11, wherein the cluster of query terms (13) comprises also the connected terms between a pair of indirectly connected terms from the respective job query.

13. Computer program comprising program code for executing the method according to one of the claims 1 to 12 when executed on a computer.
